# EUROPÄISCHE PATENTANMELDUNG

(11) **EP 2 312 074 A2**
(43) Veröffentlichungstag der Anmeldung: **20.04.2011**
(21) Anmeldenummer: 10186432.0
(22) Anmeldetag: 04.10.2010
(51) Int. Cl.: E04B 1/68, E04B 2/88, E04B 2/96, E04F 13/08, E06B 3/54, F16J 15/06

(54) **Dichtungsanordnung**

(30) Priorität: 02.10.2009 DE 202009013261 U
(71) Anmelder: Raico Bautechnik GmbH, 87772 Pfaffenhausen (DE)
(72) Erfinder: Vögele, Rainer, 86470 Thannhausen (DE)
(74) Vertreter: Charrier, Rapp & Liebau

(57) **Zusammenfassung**

Die Erfindung betrifft eine Dichtungsanordnung, zumindest bestehend aus wenigstens zwei in einem Stoßbereich (I) endenden Dichtungen (D, D'), die insbesondere für das Abdichtung des längsverlaufenden Spaltes zwischen dem Fassadenelement und dem Fassadentragprofil in einer Fassaden- oder Dachkonstruktion vorgesehen sind, wobei die Dichtung (D, D') zumindest ein längsverlaufendes Dichtungselement (3, 3') umfasst und wobei das in dem Stoßbereich (I) hineinragende Dichtungsende der Dichtung (D) ein gegenüber dem Dichtelement (3) vor- oder zurückstehendes Verstärkungsprofil (5) aufweist.

## Beschreibung

Die Erfindung betrifft eine Dichtungsanordnung, die zumindest aus wenigstens zwei in einem Stoßbereich endenden Dichtungen besteht, die insbesondere für das Abdichten des längsverlaufenden Spaltes zwischen dem Fassadenelement und dem Fassadentragprofil in einer Fassaden- oder Dachkonstruktion vorgesehen sind.

Derartige Dichtungen beziehungsweise Dichtungsanordnungen sind im Fassadenbau bekannt. Insbesondere ist es auch bekannt, solche Dichtungen, die zur Abdichtung des Spaltes zwischen dem Fassadenelement und dem Fassadentragprofil dienen, aneinander zu stoßen, wenn die Länge des Dichtungsprofils nicht ausreicht. Das heißt, derartige Dichtungen werden dann aneinander gefügt und zwar so, dass möglichst kein Spalt entsteht, durch den Feuchtigkeit zu dringen vermag. Auch ist es bekannt, Dichtungen mit einem Verstärkungsprofil auszustatten, welches die Stabilität der Dichtung erhöht. Gerade bei derartigen Dichtungen existiert das Problem des Abdichtens, insbesondere des wasserdichten Abdichtens von Stoßverbindungen. Des Weiteren besteht ein Problem der Abdichtung im Bereich von Pfosten- und Riegelverbindungen, an deren Kreuzungs- beziehungsweise Knotenpunkten, in dem zum Beispiel drei oder mehrere Dichtungen zu einem Punkt beziehungsweise Kreuz zusammenlaufen.

Ein ähnliches Problem löst ein Knoten zum Verbinden von Stäben eines Flächentragwerkes, welcher in der europäischen Patentanmeldung EP 1 593 789 A2 vorgestellt wird. Diese Lösung dient allerdings lediglich dazu, entsprechende Knoten eines Flächentragwerkes abzudichten. Dichtungsanordnungen, die auch außerhalb von Knotenpunkten oder von einander anschließenden Profilen, beispielsweise eines Riegels an einem Pfosten, dienen, sind mit der in der europäischen Patentanmeldung vorgestellten Lösung nicht abzudichten. Die dort gezeigte Lösung zeigt einen Knoten zum Verbinden von mehreren Stäben eines Flächentragwerks, wobei der Knoten die Form eines Sterns mit mehreren in einer Ebene angeordneten Armen und ein Arm je zwei im wesentlichen ebene Seitenflächen aufweist sowie ein Flächentragwerk mit entsprechenden Dichtungen. Eine der beiden Seitenflächen eines ersten Armes des Knotens schließt mit der Ebene des Knotens einen anderen Winkel ein als die andere Seitenfläche des ersten Armes und/oder als eine der beiden Seitenflächen eines weiteren Armes.

Da es besonders bei unregelmäßig gekrümmten Tragwerken zumindest an einem Ende eines Stabes zu einer erheblichen Verdrehung des Profils des Stabes gegenüber dem Knotenende, aber auch den anderen ankommenden Stäben kommt, wird ein ordnungsgemäßer Anschluss nur dadurch gewährleistet, dass die Seitenwände der beiden Arme, zwischen die das Ende des Stabes eingeschoben wird, entsprechend dieser Verdrehung geneigt sind. Es handelt sich bei der vorgestellten Lösung demnach ausschließlich um eine Lösung, die dazu geeignet ist, einen entsprechenden Knoten eines Flächentragwerkes sicher abzudichten, um die beschriebenen Probleme zu beseitigen. Das Aneinanderfügen von Dichtungen, beispielsweise entlang eines Tragprofils einer Fassadenkonstruktion oder aber in einem Anschlussknoten, wo ein Riegel mit einem Pfosten verbunden wird, ist mit dieser Lösung nicht realisierbar. Insbesondere erscheint die Lösung insgesamt auch als sehr kompliziert und aufwändig und ist daher nur für spezielle Lösungen einsetzbar.

Aufgabe der Erfindung ist es, eine unkomplizierte Lösung für eine wasserdichte Abdichtung einer Stoßverbindung von wenigstens zwei Dichtungen, insbesondere für die Abdichtung des Spaltes zwischen einem Fassadenelement und einem Fassadentragprofil zur Verfügung zu stellen, die den Stoßbereich der aneinanderstoßenden Dichtungen sicher abdichtet.

Die Erfindung geht von dem vorher beschriebenen Stand der Technik aus und schlägt zur Lösung des geschilderten Problems eine Dichtungsanordnung vor, zumindest bestehend aus wenigstens zwei in einem Stoßbereich endenden Dichtungen, die insbesondere für das Abdichten des längsverlaufenden Spaltes zwischen dem Fassadenelement und dem Fassadentragprofil in einer Fassaden- oder Dachkonstruktion vorgesehen sind und die Dichtung ein Verstärkungsprofil und zumindest ein längsverlaufendes Dichtelement umfasst, wobei das in dem Stoßbereich hineinragende Dichtungsende der Dichtung ein gegenüber dem Dichtelement vor- oder zurückstehendes Verstärkungsprofil aufweist.

Durch diese Lösung gelingt es insbesondere, eine wasserdichte Verbindung von wenigstens zwei in einem Stoßbereich endenden Dichtungen zu erhalten. Demzufolge steht entweder das Verstärkungsprofil des einen Dichtelementes soweit vor, dass das zweite Dichtelement über das Verstärkungsprofil geschoben beziehungsweise das Verstärkungsprofil ein Stück in das zweite Dichtelement eingeschoben werden kann. Dadurch entsteht eine absolut wasserdichte Verbindung und es kommt nicht mehr zu dem im Stand der Technik häufig auftretenden undichten Stellen, die zu unschönen Schwitzwasserbildungen im Fassadenbereich führen können oder aber zu einer ungewünschten Korrosion. Des Weiteren wird durch eine solche undichte Verbindung im Stoßbereich auch die Wärmedämmung negativ beeinflusst. Durch die Erfindung gelingt es jetzt, eine Dichtungsanordnung zur Verfügung zu stellen, die das geschilderte Problem des Standes der Technik komplett und in einfacher Weise löst.

Eine Dichtungsanordnung, wie vorher beschrieben, zeichnet sich in einer Weiterbildung der Erfindung dadurch aus, dass das leistenartige Verstärkungsprofil im Randbereich abgewinkelt, insbesondere L-artig abgewinkelt oder rillenartig ausgebildet ist, um einen Steg zu bilden. Dieser Steg dient dann insbesondere dazu, die Dichtelemente oder Dichtungsanordnungen im bestimmungsgemäßen Einsatz zu verstärken. Die L-artige Abwinklung ist dabei insbesondere von Vorteil, da dies ermöglicht, die Dichtelemente aufzuschieben beziehungsweise auf den Steg des Verstärkungsprofils aufzustecken. Die Dichtung wird dadurch insgesamt stabiler, wodurch die Dichtwirkung insgesamt verbessert wurde und insbesondere auch die Formbeständigkeit beziehungsweise Formhaltigkeit dieser Dichtungsanordnung. Ein Nachrichten der Dichtungen nach dem Ein- beziehungsweise Aufsetzen ist dann nicht mehr erforderlich.

Des Weiteren ist es vorgesehen, dass das Verstärkungsprofil im Randbereich das Dichtelement trägt oder mit diesem verbunden ist. Beide Ausgestaltungen sind von der Erfindung mit umfasst. Die Vorteile wurden vorstehend bereits erläutert.

Eine Weiterbildung der erfindungsgemäßen Dichtungsanordnung zeichnet sich dadurch aus, dass die Dichtung zwei Dichtelemente umfasst, die bevorzugt an gegenüberliegenden Seiten des Verstärkungsprofiles angeordnet sind. Das Verstärkungsprofil ist beispielsweise hutartig oder V-artig ausgebildet, sodass es über einen Schraubkanal steckbar oder anordenbar ist. Beidseitig des Schraubkanales sind dann nach dieser Ausgestaltung Dichtelemente vorgesehen, die mit dem Verstärkungsprofil verbunden sind beziehungsweise von diesem getragen werden.

Von Vorteil ist es dabei, wenn die beiden Dichtelemente durch einen Dichtstreifen miteinander verbunden sind. Die Verbindung mit einem Dichtstreifen führt letztlich dazu, dass die Dichtung auch den Schraubkanal vollflächig umschließt und gegebenenfalls nur durch die Befestigungsschrauben punktuell durchdrungen beziehungsweise durchstochen wird. Dadurch gelingt es insgesamt die Abdichtwirkung und insbesondere auch die Wärmedämmung einer solchen Dichtungsanordnung zu erhöhen.

Selbstverständlich ist die Erfindung auch durch eine Ausgestaltung gekennzeichnet, bei der die beiden einzelnen Dichtelemente durch das Verstärkungsprofil verbunden sind. Damit wird ebenfalls eine formstabile Ausgestaltung der Dichtungsanordnung erreicht, die beispielsweise hervorragend geeignet ist, über einem Schraubkanal angeordnet zu werden. Das heißt, die beiden Dichtelemente befinden sich dann jeweils links und rechts beziehungsweise beidseitig des Schraubkanals. Damit wird der Spalt zwischen den Fassadenelement und dem Fassadentragprofil ganz hervorragend und dicht abgedichtet. Die Dämmwirkung einer solchen Anordnung ist zudem ebenfalls sehr günstig, sodass insgesamt eine verbesserte Lösung gegenüber den im Stand der Technik bekannten Dichtungsanordnungen zur Verfügung gestellt wird.

Die Erfindung zeichnet sich entsprechend einer Weiterbildung auch dadurch aus, dass der Dichtstreifen zwischen dem Fassadentragprofil und dem Verstärkungsprofil vorgesehen ist. Das heißt, das Fassadentragprofil wird dann gegenüber dem Verstärkungsprofil ebenfalls mit abgedichtet. Gegebenenfalls kann selbstverständlich auch beidseitig, das heißt, über und unter dem Verstärkungsprofil in Einbaurichtung ein Dichtstreifen vorgesehen sein.

Des Weiteren ist es nach der Erfindung auch vorgesehen, dass sich das Verstärkungsprofil zwischen den Fassadentragprofil und dem Dichtstreifen befindet. In dieser Einbauanordnung wirkt dann der Dichtstreifen gegenüber dem Fassadenprofil abdichtend und das Verstärkungsprofil liegt auf dem Fassadentragprofil auf.

Wie bereits mehrfach erwähnt, umfasst die Erfindung auch eine Ausgestaltung, bei der das Verstärkungsprofil zumindest teilweise, insbesondere im Randbereich von den Dichtelementen umgeben ist. Je nach bestimmungsgemäßen Einsatz ist es daher möglich, eine entsprechende Variante der zuvor beschriebenen Ausführungsformen zur Abdichtung des längsverlaufenden Spaltes zwischen dem Fassadenelement und dem Fassadentragprofil in einer Fassaden- oder Dachkonstruktion zu verwenden.

Die Erfindung schlägt gemäß einer Weiterbildung vor, dass eine wasserdichte Verbindung der beiden Dichtungen durch ein Eintauchen des vorstehenden Verstärkungsprofils der ersten Dichtung in eine durch das vorstehende Dichtelement der zweiten Dichtung im Bereich des zurückstehenden Verstärkungsprofiles der zweiten Dichtung gebildete Aufnahmetasche gebildet ist.

Damit wird eine überlappende Verbindung erreicht beziehungsweise ist es möglich, eine Verbindung der ersten und der zweiten Dichtung, die beispielsweise hintereinander oder in Längsrichtung nacheinander vorgesehen sind, wasserdicht miteinander zu verbinden. Das Verstärkungsprofil wird dabei auf dem einen Ende der ersten Dichtung ein Stück überstehend ausgebildet, während in der zweiten Dichtung das Verstärkungsprofil soweit zurücksteht, dass das Verstärkungsprofil der ersten Dichtung in die dadurch gebildete Aufnahmetasche einschiebbar ist beziehungsweise dort eintaucht.

Selbstverständlich ist es nach der Erfindung auch möglich, dass im Stoßbereich zwischen den beiden Dichtungen ein Dichtungsstück vorgesehen ist. Dabei kann das Dichtungsstück mindestens eine als Ausfalzung ausgebildete Aufnahmetasche zur Aufnahme des vorstehenden Verstärkungsprofiles des Dichtelementes der Dichtung oder zur Aufnahme eines separaten Kopplungselementes aufweisen. Das Dichtungsstück kann dabei aus dem gleichen Material gebildet sein, wie das Material der Dichtelemente.

Von Vorteil ist es weiterhin, dass das Dichtungsstück ein über das Dichtungsstück vorstehendes Kopplungselement aufweist, das in eine durch das vorstehende Dichtelement der Dichtung im Bereich des zurückstehenden Verstärkungsprofiles gebildete Aufnahmetasche haltend und abdichtend eingreift. Auch eine solche Ausgestaltung ist von der Erfindung umfasst und ist insbesondere auch noch dahingehend erweiterbar, dass mehrere zusammenlaufende Dichtungen mit Hilfe eines dann speziell ausgebildeten Dichtungsstückes miteinander verbunden werden können, wodurch eine absolut wasserdichte Verbindung hergestellt wird.

Von Vorteil ist es weiterhin, wenn das Verstärkungsprofil an den Stoßkanten der Stoßverbindung zurücksteht und das Dichtungsstück beziehungsweise ein überstehendes Verstärkungsprofil der zweiten Dichtung in die erste Dichtung einsetzbar beziehungsweise einschiebbar ist.

Des Weiteren ist es nach einer Ausgestaltung der Erfindung vorgesehen, dass das Verstärkungsprofil an der Stoßverbindung ein als Überstand ausgebildetes Kopplungselement aufweist, auf den das Dichtungsstück mit dort angeordneter Aufnahmetasche überlappend aufsetzbar beziehungsweise aufsteckbar ist. Auch hierdurch gelingt es, die gewünschte wasserdichte Verbindung zur Verfügung zu stellen.

Ein weiterer Aspekt der erfindungsgemäßen Dichtungsanordnung ist dadurch gekennzeichnet, dass im Stoßbereich der ersten und der zweiten Dichtung das Verstärkungsprofil der ersten Dichtung mit der zweiten Dichtung eine überlappende Verbindung bildet. Diese Ausgestaltung ist immer dann von Vorteil, wenn zwei geradlinig verlaufende Dichtungen aneinandergefügt werden sollen, um auch hier eine wasserdichte Verbindung zu erhalten. Selbstverständlich kann man dieser Ausgestaltung auch an einem Knoten, wie weiter vorn beschrieben, verwendet werden, dort allerdings dann als überlappende Verbindung zwischen einem Dichtungsstück und der jeweils dort angeschlossenen Dichtung.

Von Vorteil ist es weiterhin, wenn durch die Aufnahmetasche und das Kopplungselement eine Schnittstelle zur überlappenden Verbindung der Dichtung und des Dichtungsstücks ausgebildet ist. Diese Schnittstelle dient dann dem Aneinanderfügen beziehungsweise Verbinden der Dichtung an ein Dichtungsstück.

Von Vorteil ist es dabei selbstverständlich auch, wenn das Dichtungsstück als Formteil vorgesehen ist, welches im Querschnitt gesehen zur Form der Dichtung korrespondiert. Dadurch gelingt es, sozusagen absatzfrei, eine durchgehende Dichtungsebene im Bereich eines Knotenpunktes beziehungsweise im Bereich einer gekoppelten Dichtung mit einer anderen Dichtung mit dem Dichtungsstück zu erhalten.

Eine Ausgestaltung der Erfindung schlägt des Weiteren vor, dass das Dichtungsstück wenigstens eine Ausfalzung aufweist, die korrespondierend zur Form des Verstärkungsprofiles ausgebildet ist. Auch dies ist eine Variante, die zum Aneinanderfügen von Dichtung und Dichtungsstück dient, wobei hier eben eine Ausfalzung verwendet wird, in die dann in dieser Ausfalzung ein korrespondierendes Teil des Verstärkungsprofils mit der anzuschließenden Dichtung eingefügt werden kann.

Das Verstärkungsprofil der erfindungsgemäßen Dichtungsanordnung weist in einer Ausführungsform wenigstens einen Steg auf, welcher die Dichtung beziehungsweise das Dichtelement zu stabilisieren vermag. Bereits weiter vorn wurde die stabilisierende beziehungsweise verstärkende Wirkung des Verstärkungsprofils beschrieben. Hier ist jetzt noch ein 1-artig ausgebildeter Steg, der sich in Einbaurichtung gesehen senkrecht beziehungsweise im rechten Winkel vom waagerechten Teil des Verstärkungsprofiles nach oben erstreckt. Dieser Steg wirkt dann entsprechend stabilisierend und insbesondere auch formhaltend. So ist es beispielsweise nicht notwendig, eine derartige Dichtung, die mit einem entsprechenden Verstärkungsprofil versehen ist, in besonderer Art und Weise zu fixieren, bevor man beispielsweise das Fassadenelement montiert. Vielmehr reicht es aus, diese Dichtungsanordnung in Form des mit dem Verstärkungsprofil verstärkten Dichtelementes über einen Schraubkanal zu stecken beziehungsweise zu schieben, wodurch bereits die Endlage des Dichtelementes gleichzeitig hergestellt wird. Erst dann kann man in Ruhe und ohne Gefahr zu laufen, dass die Dichtung verrutscht, das Fassadenelement aufsetzen und fixieren und am Ende selbstverständlich entsprechend befestigen. Dies erfolgt in bekannter und üblicherweise in Form von Abdeckleisten und entsprechenden Befestigungsmitteln, wie beispielsweise Schrauben, die in das Fassadentragprofil beziehungsweise in den dort vorgesehenen Schraubkanal eingeschraubt werden.

Wie bereits erwähnt ist nach einer Ausgestaltung der Erfindung der Steg von der Auflageebene der Dichtung auf dem Fassadentragprofil gesehen in einem im wesentlichen rechten Winkel zu diesem angeordnet. Dies hat den Vorteil, dass man die Dichtung auch von oben auf den Steg aufstecken kann, wenn beispielsweise eine Abdichtung des Verstärkungsprofiles hinsichtlich des Fassadentragprofils nicht vorgesehen beziehungsweise bereits vorhanden ist. Auch kann es ausreichend sein, wenn im Randbereich der Dichtelemente ein geringer Überstand vorgesehen ist, der dann das Verstärkungsprofil im Auflagebereich überdeckt, sodass auch dort eine ausreichend dichte Anordnung entsteht.

Eine Variante der erfindungsgemäßen Dichtungsanordnung sieht vor, dass das Verstärkungsprofil im Querschnitt zumindest eine u-förmige Ausbildung aufweist oder im Querschnitt hutartig ausgebildet ist. Dies dient insbesondere der Anpassung der Form der Dichtungsanordnung mit Verstärkungsprofil und Dichtstreifen an die Form eines Fassadentragprofils mit Schraubkanal.

Demzufolge hat eine vorteilhafte Ausgestaltung der Erfindung eine Ausgestaltung, bei der das Verstärkungsprofil an die äußere Form eines Schraubkanals eines Fassadentragprofiles angepasst ist beziehungsweise dieser entspricht, insbesondere derart, dass das Verstärkungsprofil über den Schraubkanal steckbar beziehungsweise auf diesen aufsetzbar ist. Diese Variante wurde bereits mehrfach beschrieben, weshalb weitere Erläuterungen hierzu nicht notwendig sind.

Von Vorteil ist es weiterhin, wenn an dem Verstärkungsprofil beidseitig am Rand, über den Steg nach Außen vorstehend, je eine Nase angeformt ist. Diese Nase dient dazu, die Wärmedämmung im Glasfalzbereich beziehungsweise im Fassadenfalzbereich weiter zu verbessern. Durch diese Nase wird dieser Glasfalzraum beziehungsweise Fassadenelementfalzraum zumindest teilweise unterbrochen, sodass die Zirkulation der dort vorhandenen Luft gehemmt beziehungsweise unterbrochen wird. Dadurch wird die Wärmedämmung in dem Falzbereich weiter verbessert.

Des Weiteren schlägt die Erfindung vor, dass an dem Verstärkungsprofil zumindest einseitig eine Abstandsrippe angeordnet ist. Diese Abstandsrippe hat die Aufgabe, die übergestülpten beziehungsweise übergeschobenen Dichtstreifen der Dichtungen auf dem Verstärkungsprofil seitlich zu begrenzen beziehungsweise zu fixieren.

Das Verstärkungsprofil ist gemäß einer Ausgestaltung der Erfindung vorteilhafterweise aus Kunststoff gebildet. Dies dient auch der Verbesserung der Wärmedämmung, da dadurch erreicht werden kann, dass eine thermische Trennung zwischen Fassadentragprofil und Fassadenelement erhalten wird. Insbesondere bei aus Metall ausgebildeten Fassadentragprofilen ist diese Ausgestaltung von Vorteil, da hier ein deutlicherer Effekt der Verbesserung der Wärmedämmung erreicht werden kann, allein durch die Ausgestaltung des Verstärkungsprofils aus Kunststoff. Allerdings ist diese Ausgestaltung auch deshalb von Vorteil, weil sich diese Verstärkungsprofile als Kunststoffprofile sehr einfach herstellen lassen.

Die Erfindung schlägt weiterhin vor, dass das Dichtungsstück aus einem flexiblen Dichtungsmaterial, insbesondere aus dem gleichen Material wie die Dichtung gebildet ist. Die Vorteile dieser Ausgestaltung wurden weiter vorn ebenfalls beschrieben, weshalb darauf zurückgegriffen werden kann.

Wie ebenfalls bereits erwähnt, schlägt die Erfindung auch vor, dass das Dichtungsstück als Knotenpunkt für mehr als zwei aneinanderstoßende Dichtungen beziehungsweise Dichtungsabschnitte mit dazu entsprechender Anzahl von Ausfalzungen beziehungsweise Anschlüssen oder Schnittstellen ausgebildet ist. Derartige Dichtungsstücke lassen sich ebenfalls im Extrudierverfahren relativ einfach und kostengünstig herstellen.

Von Vorteil ist es auch, wenn die Dichtungsanordnung durch eine, im Querschnitt gesehen, hutartige Ausgestaltung der Dichtungen beziehungsweise der durch den Dichtstreifen verbundenen Dichtelemente gekennzeichnet ist. Die Vorteile einer solchen hutartigen Ausgestaltung sind ebenfalls bereits mehrfach erwähnt worden.

Eine geschickte Ausgestaltung der Dichtungsanordnung nach der Erfindung schlägt des Weiteren vor, dass im Stoßbereich mindestens zwei Dichtungen enden, deren Längsachsen sich in einem spitzen, rechten oder stumpfen Winkel schneiden oder einen Winkel von 180° einschließen.

Ein weiterer Aspekt der Erfindung ist dadurch gegeben, dass diese neben der bereits mehrfach und ausführlich beschriebenen Dichtungsanordnung auch ein Dichtungsstück einer Dichtungsanordnung, wie vorher beschrieben, vorschlägt. Dieses Dichtungsstück ist geeignet, für eine Dichtungsanordnung einer der vorher beschriebenen Ausführungsformen zu dienen. Dieses Dichtungsstück ist dabei, wie bereits mehrfach erwähnt, für die Ausführung einer absolut wasserdichten Verbindung von Dichtungsabschnitten an einer Fassaden- oder Dachkonstruktion vorgesehen.

Des Weiteren schlägt die Erfindung auch eine Fassaden- und Dachkonstruktion vor, welche gebildet aus miteinander verbundenen Fassadentragprofilen, die Fassadenelemente tragen, wobei auf dem Fassadentragprofilen Dichtungen angeordnet sind, insbesondere zwischen mindestens zwei Dichtungen je eine Dichtungsanordnung, wie vorher beschrieben, vorgesehen ist.

In der Zeichnung ist die Erfindung insbesondere in einem Ausführungsbeispiel schematisch dargestellt. Es zeigen:
- **Fig. 1a bis 1e**: verschiedene Ansichten einer ersten Ausführungsform der erfindungsgemäßen Dichtungsanordnung,
- **Fig. 2a, b**: verschiedene Ansichten einer zwei-ten Ausführungsform der erfindungsgemäßen Dichtungsanordnung als Draufsicht,
- **Fig. 3a, b**: eine Seitenansicht der zweiten Ausführungsform gemäß der Fig. 2a und 2b,
- **Fig. 4a, b**: eine Seitenansicht der ersten Ausführungsform gemäß der Fig. 1a bis 1e,
- **Fig. 5a, b**: Schnittdarstellung von Dichtele-menten und Verstärkungsprofilen für die Dichtungsanordnung nach der Erfindung.

In den Figuren sind gleiche oder einander entsprechende Elemente jeweils mit den gleichen Bezugszeichen bezeichnet und werden daher, sofern nicht zweckmäßig, nicht erneut beschrieben.

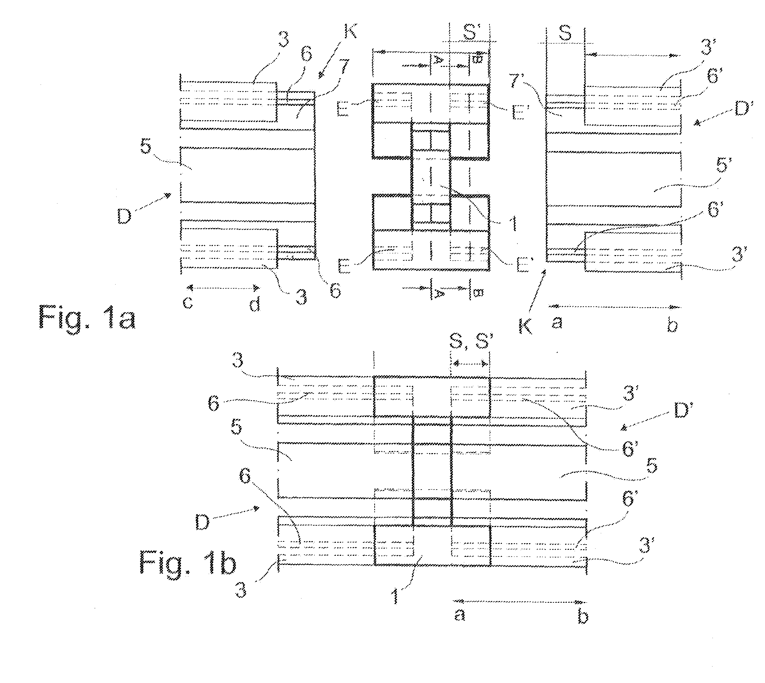

Die Fig. 1a und 1b zeigen eine Ausgestaltung einer ersten Ausführungsform einer Dichtungsanordnung nach der Erfindung. Dabei besteht die Dichtungsanordnung in der dargestellten Variante aus zwei Dichtungen D, D' mit einem Dichtungsstück 1. Die Dichtungen D bestehen in der dargestellten Variante aus zwei Dichtelementen 3 sowie einem Verstärkungsprofil 5. Das Verstärkungsprofil 5 hat in Auflagerichtung senkrecht nach oben sich erstreckende Stege 6, die in die Dichtelemente 3 eingreifen. Anderenfalls sind die Dichtelemente 3 entweder auf dem Steg beziehungsweise über diesen inklusive des unteren Bereiches des Verstärkungsprofiles 5 geschoben beziehungsweise gesteckt. In dem Bereich K der Dichtung D ist das Kopplungselement schematisch angedeutet, das im Bereich der Dichtung D derart ausgestaltet ist, dass die Dichtelemente 3 hier zurückgestehen und das Verstärkungsprofil 5 mit seinen Stegen 6 hervorsteht. Dies ist in der Darstellung auch mit den Bezugszeichen 7 als Überstand bezeichnet. Die Dichtung D' trägt im Wesentlichen die gleichen Bezugszeichen, wie die Dichtung D, allerdings jeweils mit versehen. Wie aus der Darstellung ersichtlich, ist des Weiteren eine Schnittstelle S an der Dichtung D' definiert und die Schnittstelle S' an dem Dichtungsstück 1.

In der Darstellung gemäß Fig. 1a ist vom Dichtungsstück 1 jeweils eine Aufnahmetasche bezeichnet, die das Bezugszeichen E beziehungsweise E' trägt. Die Schnittstelle ist demzufolge dazu definiert, um die Verbindung zwischen Dichtungsstück 1 und Dichtung D' herzustellen. Nicht bezeichnet auf der Dichtungsseite D ist die gleiche Schnittstelle allerdings dort auch vorhanden. Wie ersichtlich wird die Dichtung D in Richtung des Doppelpfeiles c-d in Richtung d geschoben, um die Verbindung herzustellen. Dabei greift der Überstand 7 in die Aufnahmetasche E des Dichtungsstückes 1 ein. In gleicher Weise wird die Dichtung D' in Richtung a des weiteren Doppelpfeiles abgeschoben, um auch hier die wasserdichte Verbindung herzustellen. In der Fig. 1b ist dann die zusammengeschobene Position ersichtlich, bei der klar ist, dass sich hier die überstehenden Teile des Verstärkungsprofils 5 beziehungsweise 5' jeweils in dem Dichtungsstück 1 befinden. Damit entsteht eine absolut dichte Verbindung, die sich im Fassadenbau in hervorragender Weise zur Abdichtung des längsverlaufenden Spaltes zwischen dem nicht dargestellten Fassadenelement und dem Fassadentragprofil einer Fassaden- oder Dachkonstruktion einsetzen lässt.

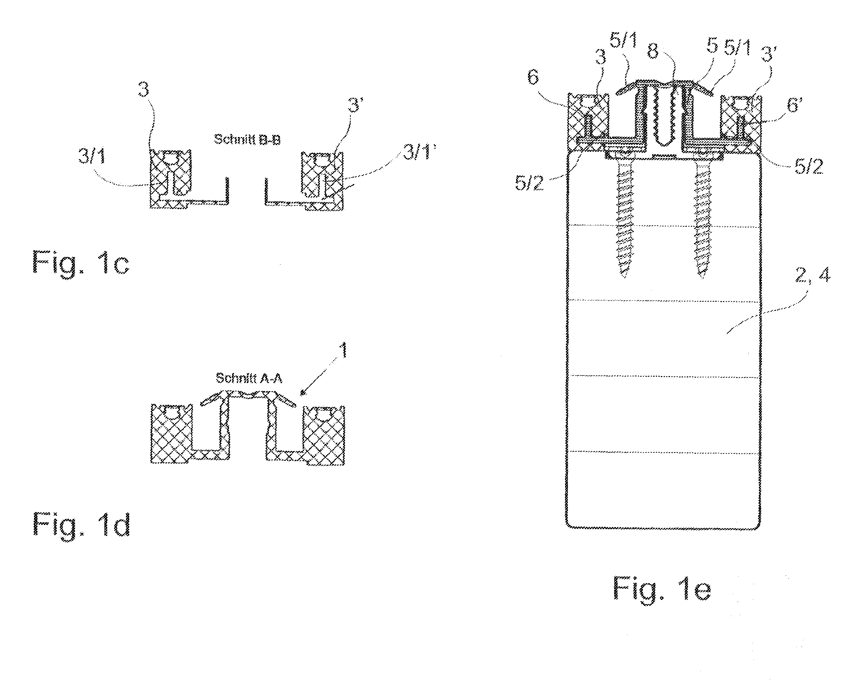

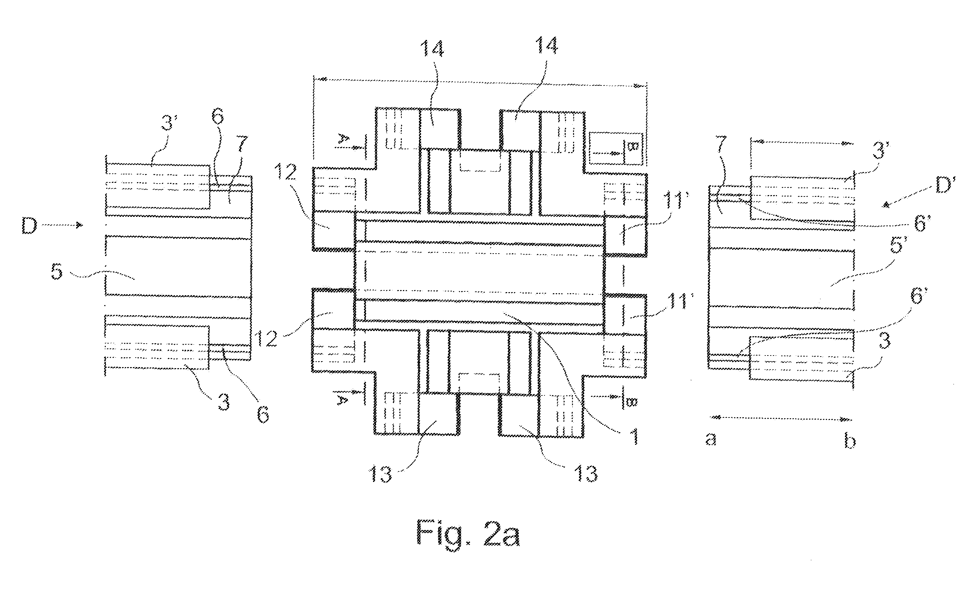

In der Fig. 1a sind noch Schnittlinien A-A und B-B definiert. Die diesbezüglichen Schnittdarstellungen in Seitenansicht beziehungsweise Vorderansicht, befinden sich dann in den Fig. 1c und 1d, wobei hier gleich bemerkt wird, dass auch die in der Fig. 2a definierten Schnittlinien A-A und B-B hier in gleicher Weise dargestellt sind. Dabei ist in Fig. 1c lediglich ein Schnitt durch die Dichtung D gezeigt, der die beiden Dichtelemente 3 und 3' zeigt. Diese befinden sich jeweils links und rechts eines dann in Fig. 1e sichtbaren Schraubkanales 8. Dieser Schraubkanal 8 kann so wie in Fig. 1e auf ein Profil aufgeschraubt sein beziehungsweise dort eingelassen und befestigt sein. Es ist allerdings auch möglich, im Falle einer Metallkonstruktion, diesen Schraubkanal beim ziehen des Fassadenprofiles mitanzuformen. Wie ersichtlich, besitzen die Dichtelemente 3 und 3' entsprechende Ausnehmungen 3/1 beziehungsweise 3/1'. In diese greifen dann die Stege 6 des Versärkungsprofiles 5, in Fig. 1c nicht dargestellt, ein. Durch das Verstärkungsprofil 5 wird dabei auch die Dichtung insgesamt verbunden, indem die beiden Dichtelemente 3 und 3' durch das Verstärkungsprofil 5 miteinander verbunden sind.

In der Fig. 1d ist der Schnitt an der Mittellinie des Dichtungsstückes 1 dargestellt. Wie ersichtlich, hat das Dichtungsstück 1 im Schnitt gesehen, die gleiche Ausgestaltung wie die Dichtung inklusive des Verstärkungsprofiles. Dies hat den Vorteil, dass die Dichtung D mit ihren Dichtelementen 3 und 3' problemlos an das Dichtungsstück 1 angefügt werden können, wenn beispielsweise, wie in Fig. 1a dargestellt, das Dichtungsstück in Fig. 1d nicht ersichtliche Aufnahmetaschen aufweist.

Die Fig. 1e zeigt ein Fassadentragprofil 2, 4 im Schnitt und zwar mit einem darauf befestigten Schraubkanal 8, einem Verstärkungsprofil 5 mit Stegen 6 sowie den beiden Dichtelementen 3 und 3'. Die Fassadentragkonstruktion ist dabei mit dem Bezugszeichen 2 und 4 versehen, da es sich dabei sowohl um Pfosten- als auch um Riegelprofile einer Fassadenkonstruktion handeln kann.

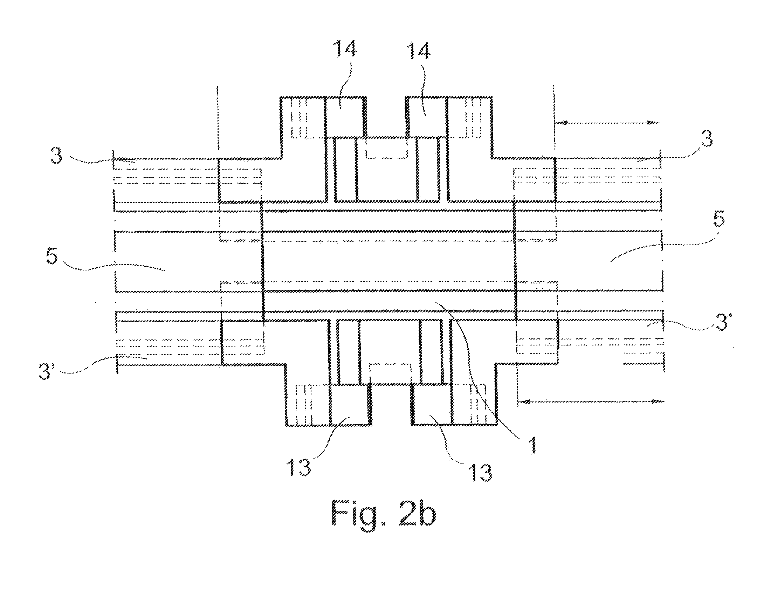

Die Fig. 2a zeigt verschieden Ansichten einer zweiten Ausführungsform der erfindungsgemäßen Dichtungsanordnung als Draufsicht. wie bereits in Fig. 1a und 1b, sind auch hier jeweils links und rechts des Dichtungsstückes 1 Dichtungen D beziehungsweise D' vorgesehen. Im Unterschied zu der in der Fig. 1 gezeigten Ausgestaltung, handelt es sich bei der in Fig. 2a dargestellten Form um einen Knotenpunkt, an dem insgesamt vier Dichtungen D beziehungsweise D' anschließbar sind. Das Wirkprinzip beziehungsweise Darstellungsprinzip ist das Gleiche, wie das in der Fig. 1 dargestellte, nämlich, dass die Dichtungen D beziehungsweise D' zurückstehende Dichtelemente 3 beziehungsweise 3' aufweisen, wodurch ein Überstand 7 des Verstärkungsprofils 5 entsteht. Dieser Überstand 7 wird dann beim Anfügen an das Dichtungsstück 1 in die als Ausfalzung 12 beziehungsweise 11' ausgebildete Aufnahmetasche geschoben. Gleiche Bezugszeichen besitzen die gleiche Bedeutung wie in der Fig. 1, weshalb auf eine erneute Vorstellung verzichtet wird. Ein wesentlicher Unterschied der Fig. 2a und 2b zu Fig. 1 besteht darin, dass es sich hier um ein Dichtungsstück 1 handelt, welches dazu dient vier Dichtungen D beziehungsweise D1 aufzunehmen, wodurch ein Knotenpunkt entsteht, der geeignet ist, an einem Anschlusspunkt eines Pfostens mit einem Riegel eingesetzt zu werden, um auch dort den Spalt zwischen dem Fassadenelement und der Fassadentragkonstruktion sicher, insbesondere wasserdicht abzudichten. Die Schnittlinien A-A und B-B sind als Schnittdarstellungen in der Fig. 1c beziehungsweise 1d dargestellt.

Die Fig. 2b zeigt die gleiche Ausgestaltung wie Fig. 2a, allerdings in einer zusammengeschobenen Position, wo die Dichtungen D und D' an das Dichtungsstück 1 angeschlossen beziehungsweise eingeschoben sind. An den Ausfalzungen 13 und 14 können ebenfalls hier nicht dargestellte Dichtungen angefügt werden, so dass eine Kreuzung beziehungsweise ein Knotenpunkt, wie weiter vorn beschrieben, entsteht.

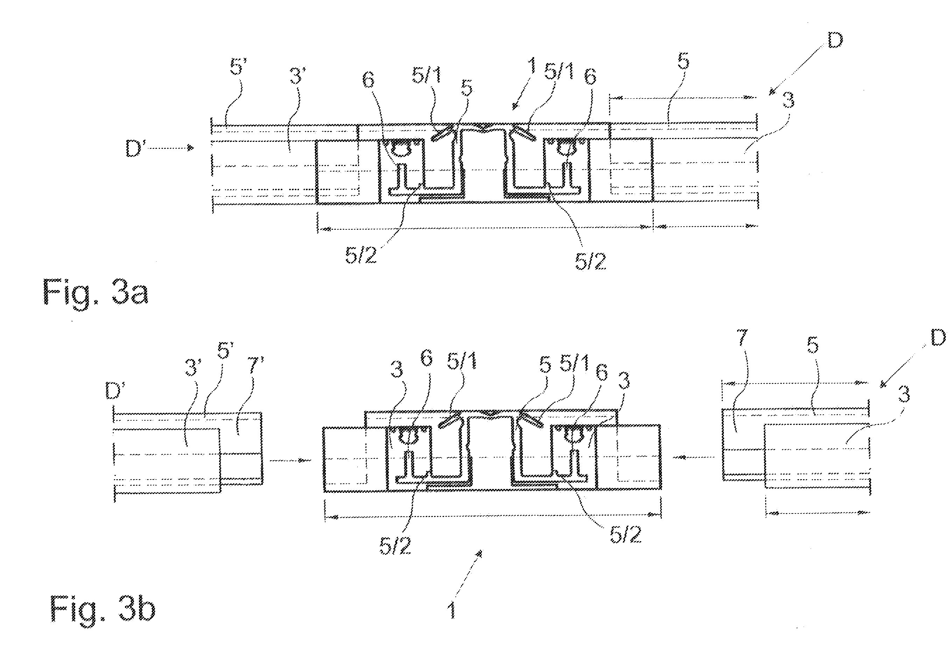

Die Fig. 3a und 3b zeigen eine Seitenansicht der zweiten Ausführungsform, wie sie in den Fig. 2a und 2b dargestellt wurde. Dabei ist ersichtlich, dass es bei der Fig. 3a sich um die zusammengefügte Variante handelt, während in Fig. 3b die auseinandergezogene Form zu sehen ist. wie ersichtlich, sind die Dichtungen D beziehungsweise D' an das Dichtungsstück 1 angefügt, wobei das Dichtungsstück 1 in Ansichtsrichtung nach hinten ebenfalls noch eine Dichtung zeigt, die ein Verstärkungsprofil 5 aufweist. An dem Verstärkungsprofil 5 sind nach außen vorstehende Nasen 5/1 angeformt, die dazu dienen, den Zwischenraum zwischen dem Dichtelement 3 beziehungsweise dem nicht dargestellten Fassadenelement (Falzraum) zu unterbrechen, sodass damit die Wärmedämmung im Glasfalzraum beziehungsweise Fassadenelement-Falzraum verbessert wird.

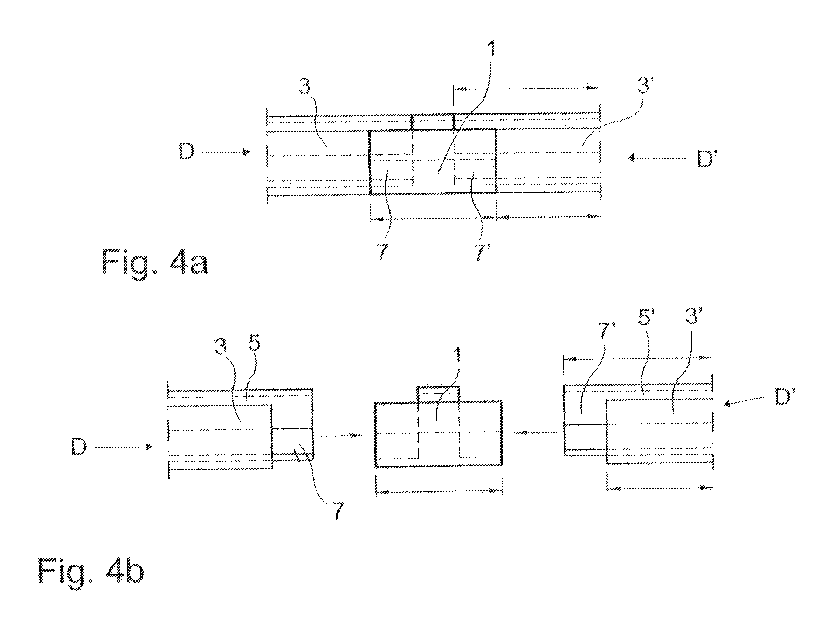

Fig. 4a und 4b zeigen eine Seitenansicht in zusammengeschobener beziehungsweise auseinandergezogener Form der ersten Ausführungsform, wie sie in der Fig. 1 vorgestellt wurde. Auch hier bedeuten gleiche Bezugszeichen die gleichen Merkmale, wie sie bereits vorgestellt wurden. Klar ersichtlich ist, dass hier ebenfalls das Verstärkungsprofil 5 der Dichtungen D hervorsteht und in das Dichtungsstück eingeschoben werden kann. Wie die Fig. 4a zeigt, entsteht dadurch eine geschlossene Abdichtung des Zwischenraumes zwischen dem nichtdargestellten Fassadenelement und dem ebenfalls hier nicht dargestellten Fassadentragprofil.

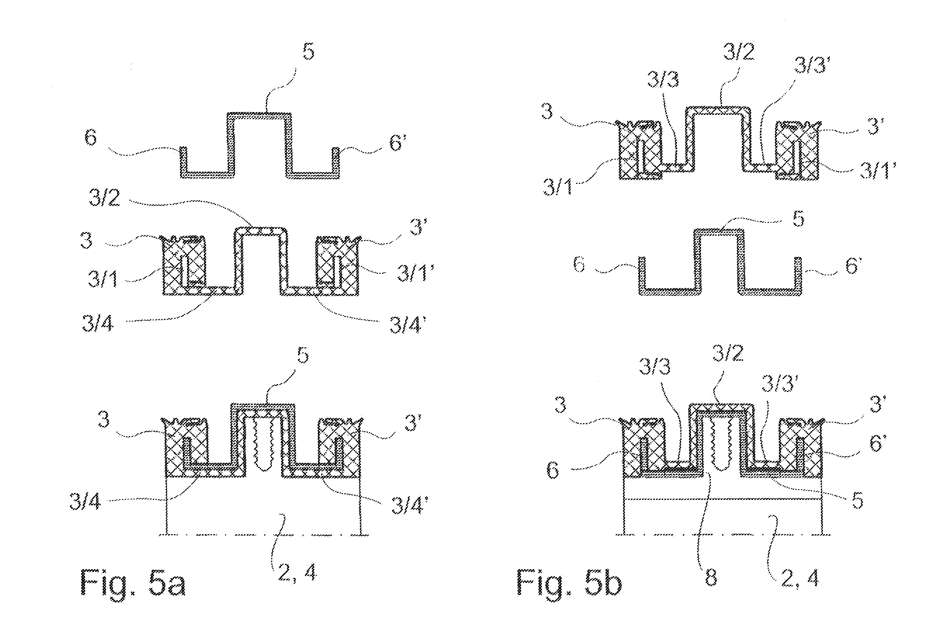

In der Fig. 5 sind Schnittdarstellungen von Dichtelementen und Verstärkungsprofilen unterschiedlicher Ausgestaltung für die Dichtungsanordnung nach der Erfindung gezeigt. In der Fig. 5a ganz oben ist ein Verstärkungsprofil gezeigt, welches hutartig ausgebildet ist, sodass es über einen Schraubkanal, wie in der unteren Darstellung ersichtlich, gesteckt beziehungsweise geschoben werden kann. In der Ausgestaltung nach der Fig. 5a ist dabei die Dichtung D mit den Dichtelementen 3 und 3' durch Dichtstreifen 3/4 beziehungsweise 3/4' miteinander verbunden. Dabei ist es in dieser Ausgestaltung so vorgesehen, dass die Dichtstreifen 3/4 beziehungsweise 3/4' ebenfalls eine hutartige Ausgestaltung in der Mitte aufweisen, sodass auch diese über den Schraubkanal gesteckt werden können. Durch diese Ausführungsform wird dann das Fassadentragprofil 2, 4 mit den Dichtstreifen 3/4 beziehungsweise 3/4' abgedichtet. Das Verstärkungsprofil nach oben ist zumindest im Bereich des Falzraumes, der nicht näher bezeichnet wurde, nicht durch einen Dichtungsstreifen abgedeckt. Das Verstärkungsprofil 5 hat links und rechts einen Steg 6 beziehungsweise 6', der, wie in Fig. 5a ganz unten dargestellt, in die Dichtelemente 3 beziehungsweise 3' eingreift. Dazu braucht man bei der Montage nur die Dichtstreifen 3/4 beziehungsweise 3/4' nach Außen zu klappen, das Verstärkungsprofil 5 einzufügen und dann die Dichtstreifen wieder in ihre gewünschte Form zurückzuklappen. Dadurch wird dann der Spalt 3/1 beziehungsweise 3/1' von den Dichtelementen 3 beziehungsweise 3' vollständig umschlossen.

Die Fig. 5b unterscheidet sich von der in Fig. 5a dargestellten Variante lediglich dadurch, dass hier Dichtstreifen 3/3 beziehungsweise 3/3' vorgesehen sind, die im montierten Zustand nicht auf dem Fassadentragprofil 2 beziehungsweise 4 aufliegen. Hier liegt das Verstärkungsprofil 5 mit seinen Stegen 6 beziehungsweise 6 1 in Einbauzustand auf dem Tragprofil 2, 4 beziehungsweise im Falle eines Schraubkanalprofiles, welches die gleiche Breite besitzt wie das Fassadentragprofil 2, 4, auf den in Einbaustellung waagerechten Seiten des Schraubkanalprofiles 8. Die Dichtstreifen 3/3 beziehungsweise 3/3 1 befinden sich dann auf der den nicht näher bezeichneten Falzräumen zugewandten Seite. Die Dichtstreifen 3/3, 3/3' sind mit einer hutartigen Verbindung miteinander verbunden. Die unterste Darstellung der Fig. 5b zeigt diese Ausgestaltung der Dichtung für die erfindungsgemäße Dichtungsanordnung in montiertem Zustand, sodass hier das Verstärkungsprofil 5 auf dem Fassadentragprofil beziehungsweise auf dem Schraubkanal aufliegt beziehungsweise diesen umfasst. Wie ersichtlich, sind die Dichtelemente 3 beziehungsweise 3' an ihren Außenseiten etwas stärker ausgeführt, sodass zumindest in diesem Bereich auch das Fassadentragprofil gegenüber dem Fassadenelement (nicht dargestellt) abgedichtet wird. Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, dass das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Es ist weiter zu beachten, dass die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Dichtungsanordnung, zumindest bestehend aus wenigstens zwei in einem Stoßbereich (I) endenden Dichtungen (D, D'), die insbesondere für das Abdichtung des längsverlaufenden Spaltes zwischen dem Fassadenelement und dem Fassadentragprofil in einer Fassaden- oder Dachkonstruktion vorgesehen sind, wobei die Dichtung (D, D') zumindest ein längsverlaufendes Dichtungselement (3, 3') umfasst und wobei das in dem Stoßbereich (I) hineinragende Dichtungsende der Dichtung (D) ein gegenüber dem Dichtelement (3) vor- oder zurückstehendes Verstärkungsprofil (5) aufweist.

2. Dichtungsanordnung nach Anspruch 1, **dadurch gekennzeichnet, dass** das leistenartige Verstärkungsprofil (5) im Randbereich abgewinkelt oder rillenartig ausgebildet ist, um einen Steg (6) zu bilden.

3. Dichtungsvorrichtung nach einem der beiden der vorhergehenden Ansprüche, **dadurch gekennzeichnet, dass** das Verstärkungsprofil (5) im Randbereich das Dichtelement (3, 3') trägt oder mit diesem verbunden ist.

4. Dichtungsanordnung nach einem oder mehreren der vorhergehenden Ansprüche, **dadurch gekennzeichnet, dass** die Dichtung (D) zwei Dichtelemente (3, 3') umfasst, die bevorzugt an gegenüberliegenden Seiten des Verstärkungsprofils (5) angeordnet sind.

5. Dichtungsanordnung nach einem oder mehreren der vorhergehenden Ansprüche, **dadurch gekennzeichnet, dass** die beiden Dichtelemente (3, 3') durch einen Dichtstreifen (3/2, 3/3, 3/4) miteinander verbunden sind.

6. Dichtungsanordnung nach einem oder mehreren der vorhergehenden Ansprüche, **dadurch gekennzeichnet, dass** die beiden einzelnen Dichtelemente (3, 3') durch das Verstärkungsprofil (5) verbunden sind.

7. Dichtungsanordnung nach einem oder mehreren der vorhergehenden Ansprüche, **dadurch gekennzeichnet, dass** eine wasserdichte Verbindung der beiden Dichtungen (D, D') durch ein Eintauchen des vorstehenden Verstärkungsprofils (5) der ersten Dichtung (D) in eine durch das vorstehende Dichtelement (3') der zweiten Dichtung (D') im Bereich des zurückstehenden Verstärkungsprofils (5') der zweiten Dichtung (D') gebildete Aufnahmetasche (E) gebildet ist.

8. Dichtungsanordnung nach einem oder mehreren der vorhergehenden Ansprüche, **dadurch gekennzeichnet, dass** im Stoßbereich zwischen den beiden Dichtungen (D, D') ein Dichtungsstück (1) vorgesehen ist.

9. Dichtungsanordnung nach einem oder mehreren der vorhergehenden Ansprüche, **dadurch gekennzeichnet, dass** das Dichtungsstück (1) mindestens eine als Ausfalzung (11) ausgebildete Aufnahmetasche (E) zur Aufnahme des vorstehenden Verstärkungsprofils (5) oder Dichtelements (3) der Dichtung (D) oder zur Aufnahme eines separaten Kopplungselements aufweist.

10. Dichtungsanordnung nach einem oder mehreren der vorhergehenden Ansprüche, **dadurch gekennzeichnet, dass** das Dichtungsstück (1) ein über das Dichtungsstück (1) vorstehendes Kopplungselement (K) aufweist, das in eine durch das vorstehende Dichtelement (3) der Dichtung (D) im Bereich des zurückstehenden Verstärkungsprofils (5) gebildete Aufnahmetasche (E) haltend und abdichtend eingreift.

11. Dichtungsanordnung nach einem oder mehreren der vorhergehenden Ansprüche, **dadurch gekennzeichnet, dass** das Verstärkungsprofil (5) an der Stoßverbindung ein als Überstand (7) ausgebildetes Kopplungselement (K) aufweist, auf den das Dichtungsstück (1) mit dort angeordneter Aufnahmetasche (E) überlappend aufsetzbar bzw. aufsteckbar ist.

12. Dichtungsanordnung nach einem der Ansprüche 8 bis 11, **dadurch gekennzeichnet, dass** das Dichtungsstück (1) als Formteil vorgesehen ist, welches, im Querschnitt gesehen, zur Form der Dichtung (D, D') korrespondiert.

13. Dichtungsanordnung nach einem oder mehreren der vorangehenden Ansprüche, **dadurch gekennzeichnet, dass** das Verstärkungsprofil (5) an die äußere Form eines Schraubkanals (8) eines Fassadentragprofils angepasst ist bzw. dieser entspricht, insbesondere derart dass das Verstärkungsprofil (5) über den Schraubkanal (8) steckbar bzw. auf diesen aufsetzbar ist.

14. Dichtungsanordnung nach einem oder mehreren der vorhergehenden Ansprüche, **dadurch gekennzeichnet, dass** das Dichtungsstück (1) als Knotenpunkt für mehr als zwei aneinanderstoßende Dichtungen (D, D') bzw. Dichtungsabschnitte mit dazu entsprechender Anzahl von Ausfalzungen (11, 12, 13, 14) bzw. Anschlüssen ausgebildet ist.

15. Fassaden- und Dachkonstruktion, welche gebildet ist aus miteinander verbundene Fassadentragprofilen, die Fassadenelemente tragen, wobei auf den Fassadentragprofilen Dichtungen angeordnet sind und insbesondere zwischen mindestens zwei Dichtungen je eine Dichtungsanordnung nach einem oder mehreren der vorhergehenden Ansprüche 1 bis 14 vorgesehen ist.
